Europäisches Patentamt

European Patent Office

Office européen des brevets

(19)

(11) Veröffentlichungsnummer: **0 046 602**
**B1**

(12)

# EUROPÄISCHE PATENTSCHRIFT

(45) Veröffentlichungstag der Patentschrift:
21.11.84

(51) Int. Cl.³: **B 62 D 37/02**

(21) Anmeldenummer: 81106646.3

(22) Anmeldetag: 26.08.81

(54) **Einrichtung zur Verbesserung der Bodenhaftung von Landfahrzeugen.**

(30) Priorität: 26.08.80 DE 3032074

(43) Veröffentlichungstag der Anmeldung:
03.03.82 Patentblatt 82/9

(45) Bekanntmachung des Hinweises auf die Patenterteilung:
21.11.84 Patentblatt 84/47

(84) Benannte Vertragsstaaten:
AT BE CH FR GB IT LI LU NL SE

(56) Entgegenhaltungen:
DE - A - 1 630 916
DE - A - 2 924 762
DE - B - 1 251 162

(73) Patentinhaber: Fischer, Herwig, Kickenstrasse 88,
D-4156 Willich 4 (DE)

(72) Erfinder: Fischer, Herwig, Kickenstrasse 88,
D-4156 Willich 4 (DE)

(74) Vertreter: Patentanwälte TER MEER - MÜLLER -
STEINMEISTER, Triftstrasse 4, D-8000 München 22 (DE)

## Beschreibung

Die Erfindung betrifft eine Einrichtung zur Verbesserung der Bodenhaftung von Landfahrzeugen durch Vergrößerung der Anpreßkraft zwischen der Lauffläche der Fahrzeugreifen und der Oberfläche der Fahrbahn, wie sie durch die DE-A-1 630 916 bekannt ist.

Zur Verbesserung der sogenannten Straßenlage von Kraftfahrzeugen wird ein möglichst guter Kontakt zwischen der Lauffläche der Fahrzeugreifen und der Oberfläche der Fahrbahn angestrebt, die bei allen Fahrbedingungen aufrechterhalten werden soll. Diese sogenannte Bodenhaftung ist insbesondere bei Rennfahrzeugen oder Fahrzeugen mit sportlichen Ausführungen von Bedeutung.

Es ist bekannt, die Bodenhaftung trotz eines möglichst leichten Fahrwerkaufbaus mit einer geringen ungefederten Masse durch eine möglichst große Anpreßkraft als Normalkraft zu verbessern. Dabei wird zur Vergrößerung der Normalkraft entweder die Gewichtsverteilung (Fahrzeugmassenverteilung) für diesen Zweck optimiert, oder aber es kommen aerodynamische Hilfen als sogenannte Spoiler, Abtriebsflügel oder Abtriebsgebläse zu Einsatz.

Da die Fahrzeugmasse wegen verschiedener technischer Gegebenheiten begrenzt ist und die bekannten aerodynamischen Hilfseinrichtungen zu sperrig sind, um am ungefederten Teil des Fahrwerks angelenkt zu werden, wird es häufig in Kauf genommen, daß die erzeugten Antriebskräfte über den gefederten Teil des Fahrzeuges in die Räder geleitet werden, so daß insbesondere die folgenden Nachteile auftreten:

1.    Die Federungsabstimmung wird geschwindigkeitsabhängig.
2.    Die Maximalwerte der Abtriebskräfte werden durch die mechanische Festigkeit des schwächsten Verbindungsbauteils zwischen Rad und Abtriebserzeuger begrenzt.

Der Erfindung liegt die Aufgabe zugrunde, eine möglichst große Normalkraft unmittelbar am ungefederten Teil des Fahrzeuges angreifen zu lassen.

Ausgehend von der eingangs beschriebenen Einrichtung wird zur Lösung der gestellten Aufgabe vorgeschlagen, mindestens einen rotationssymmetrischen Körper am ungefederten Teil des Fahrzeuges anzuordnen, der um eine horizontale Achse im gleichen Drehsinn der Fahrzeugräder antreibbar und senkrecht zu seiner Achse parallel zur Oberfläche der Fahrbahn gegen die Fahrtrichtung anströmbar ist.

Bei der erfindungsgemäßen Einrichtung kommt der sogenannte Magnus-Effekt zur Anwendung, bei dem eine Querkraft senkrecht zur Achse und zur Anströmrichtung bei einem um seine Achse rotierenden und senkrecht zur Achse angeströmten Zylinder oder dergleichen entsteht.

Nach einer Ausgestaltung der Erfindung ist jedem Fahrzeugrad koaxial ein zylinder- oder kegelstumpfförmiger Rotationskörper zugeordnet, der mit einer höheren Drehzahl antreibbar ist als das Fahrzeugrad.

Mit der erfindungsgemäßen Einrichtung läßt sich — bezogen auf die Bauteilgröße und -masse — eine erhebliche Abtriebskraft auf Grund des Magnus-Effektes erzielen. Die so erzeugte Normalkraft wirkt unmittelbar auf das Rad, so daß die Federung oder andere Fahrzeugbauteile nicht belastet werden und sich somit wesentlich größere Maximalwerte der Antriebskraft realisieren lassen. Die Zunahme der ungefederten Masse ist dabei relativ gering, so daß die Straßenlage insgesamt erheblich verbessert werden kann.

Nach einer vorteilhaften Ausgestaltung der Erfindung ist zwischen dem Fahrzeugrad und dem Rotationskörper ein Übersetzungsgetriebe angeordnet, dessen Abtriebsseite mit dem Rotationskörper in Verbindung steht.

Der Rotationskörper kann nach einer weiteren Ausgestaltung der Erfindung auch zwischen zwei eine Endscheibenwirkung ausübenden Radhälften angeordnet sein.

Zur Intensivierung der Anströmung des Rotationskörpers sieht eine weitere Ausgestaltung der Erfindung vor, daß auf den Rotationskörper eine Austrittsöffnung eines düsenförmigen Kanals gerichtet ist, dessen Eintrittsöffnung gegen die Fahrtrichtung weist.

Für die Ausbildung und Anordnung des Rotationskörpers sind verschiedene vorteilhafte Lösungen denkbar. So kann der Rotationskörper beispielsweise in eine Felge des Fahrzeugrads integriert und die Achse an einem benachbarten statischen Fixpunkt gelagert sein. Der Rotationskörper kann auch in Form einer Radkappe auf der Außen- und/oder Innenseite eines Fahrzeuges angebracht sein.

Schließlich sieht eine Ausgestaltung der Erfindung noch vor, daß eine Radachse und/oder eine Antriebswelle selbst als Rotationskörper ausgebildet ist bzw. sind.

In der Zeichnung sind zwei Ausführungsbeispiele der erfindungsgemäßen Einrichtung schematisch dargestellt und werden im folgenden näher beschrieben. Es zeigt

Fig. 1 einen Rennwagen in einer abgebrochenen dargestellten Draufsicht;

Fig. 2 einen Tourenwagen in Vorderansicht.

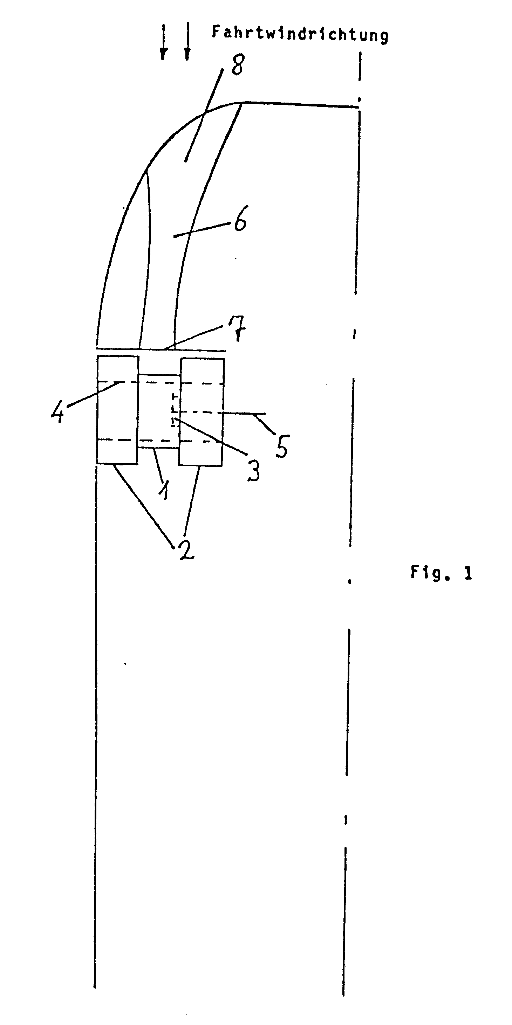

Der in Fig. 1 dargestellte Rennwagen besitzt eine breite Bereifung, wobei ein Rotationskörper 1 zwischen zwei Radhälften 2 angeordnet ist. Die Radhälften 2 üben eine aerodynamische Endscheibenwirkung aus.

Der Antrieb des Rotationskörpers 1 erfolgt über ein Getriebe 3, das beispielsweise als Zahn- oder Reibradgetriebe ausgelegt sein kann und in eine Felge 4 integriert ist sowie über Stützen 5 am nächstgelegenen statischen Fixpunkt abgefangen wird.

Eine möglichst intensive Anströmung erfährt der Rotationskörper 1 durch einen düsenförmigen Kanal 6, dessen Austrittöffnung 7 auf den Rotationskörper 1 gerichtet ist, während dessen Eintrittsöffnung 8 gegen die Fahrtrichtung weist.

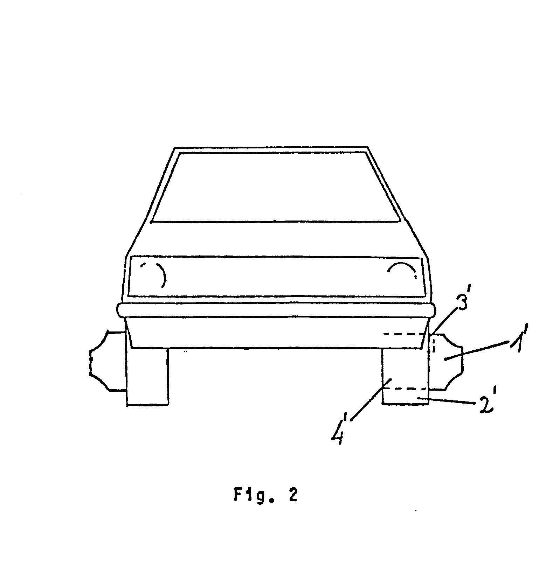

Beim Ausführungsbeispiel der Fig. 2 ist der Rotationskörper 1' in Form einer Radkappe ausgebildet, die auf der Außenseite des Fahrzeugrades 2' angebracht ist.

Der Rotationskörper 1' steht über ein Getriebe 3' mit einer Felge 4' in Verbindung und erhält auf diese Weise seine gegenüber der Drehzahl des Fahrzeugrades höhere Drehzahl. Die Anströmung senkrecht zu seiner Achse und parallel zur Oberfläche der Fahrbahn erfolgt unmittelbar durch den Fahrtwind.

## Patentansprüche

1. Einrichtung zur Verbesserung der Bodenhaftung von Landfahrzeugen durch Vergrößerung der Anpreßkraft zwischen der Lauffläche der Fahrzeugreifen und der Oberfläche der Fahrbahn, gekennzeichnet durch mindestens einen am ungefederten Teil eines Fahrzeuges angeordneten rotationssymmetrischen Körper (1, 1'), der um eine horizontale Achse im gleichen Drehsinn der Fahrzeugräder (2, 4; 2', 4') antreibbar und senkrecht zu seiner Achse, parallel zur Oberfläche der Fahrbahn gegen die Fahrtrichtung anströmbar ist.

2. Einrichtung nach Anspruch 1, dadurch gekennzeichnet, daß jedem Fahrzeugrad (2, 4; 2', 4') koaxial ein zylinder- oder kegelstumpfförmiger Rotationskörper (1, 1') zugeordnet ist, der mit einer höheren Drehzahl antreibbar ist als das Fahrzeugrad (2, 4; 2', 4').

3. Einrichtung nach den Ansprüchen 1 und 2, dadurch gekennzeichnet, daß zwischen dem Fahrzeugrad (2, 4; 2', 4') und dem Rotationskörper (1, 1') ein Übersetzungsgetriebe (3, 3') angeordnet ist, dessen Abtriebsseite mit dem Rotationskörper (1, 1') in Verbindung steht.

4. Einrichtung nach den Ansprüchen 1—3, dadurch gekennzeichnet, daß der Rotationskörper (1, 1') zwischen zwei eine Endscheibenwirkung ausübenden Radhälften (2) angeordnet ist.

5. Einrichtung nach den Ansprüchen 1—4, dadurch gekennzeichnet, daß auf den Rotationskörper (1, 1') eine Austrittsöffnung (7) eines düsenförmigen Kanals (6) gerichtet ist, dessen Eintrittsöffnung (8) gegen die Fahrtrichtung weist.

6. Einrichtung nach den Ansprüchen 1—5, dadurch gekennzeichnet, daß der Rotationskörper (1, 1') in eine Felge (4, 4') des Fahrzeugrads (2, 2') integriert und die Achse an einem benachbarten statischen Fixpunkt gelagert ist.

7. Einrichtung nach mindestens einem der Ansprüche 1—6, dadurch gekennzeichnet, daß der Rotationskörper (1, 1') in Form einer Radkappe auf der Außenseite und/oder eine Antriebswelle als Rotationskörper (1, 1') ausgebildet ist bzw. sind.

## Claims

1. Device for improving the road adherence of land vehicles by increasing the contact force acting between the running surface of the vehicle tires and the surface of the road, characterized by at least one body (1, 1') having a circular cross section being mounted on a unsprung member of the vehicle, the body being drivable about a horizontal axis in the same sense of rotation as the vehicle wheels (2, 4; 2', 4'), air flowing against the body opposite to the driving direction perpendicularly to its axis and parallel to the surface of the road.

2. Device according to claim 1, characterized in that a cylindrical or frustroconical rotational body (1, 1') is allocated coaxially to each one of the vehicle wheels (2, 4; 2', 4'), the body being drivable with a higher rotational speed than the vehicle wheels (2, 4; 2', 4').

3. Device according to claims 1 and 2, characterized in that a step-up gear (3, 3') is provided between the vehicle wheel (2, 4; 2', 4') and the rotational body (1, 1'), the output of which is connected with the rotational body (1, 1').

4. Device according to claims 1 to 3, characterized in that the rotational body (1, 1') is provided between two wheel halfs (2) acting as end discs.

5. Device according to claims 1 to 4, characterized in that an outlet opening (7) of a jet-like channel (6) is directed to the rotational body (1, 1'), the inlet opening (8) being directed against the driving direction.

6. Device according to claims 1 to 5, characterized in that the rotational body (1, 1') is an integral part of a rim (4, 4') of the vehicle wheel (2, 2'), the axle being journalled in an adjacent fixed point.

7. Device according to at least one of claims 1 to 6, characterized in that the rotational body (1, 1') is designed in the shape of a wheel cap and/or that a driving shaft is designed as rotational body (1, 1').

## Revendications

1. Dispositif pour améliorer l'adhérence au sol de véhicules routiers par augmentation de la force d'application entre la surface de roulement des pneumatiques du véhicule et la surface de la route, caractérisé par au moins un corps à symétrie de révolution (1, 1') disposé sur une partie non suspendue d'un véhicule, qui peut être entraîné autour d'un axe horizontal dans le même sens de rotation que les roues (2, 4; 2', 4') du véhicule et qui peut être balayé par l'air à contrecourant du sens de marche, perpendiculairement à son axe, et parallèlement à la surface de la route.

2. Dispositif selon la revendication 1, caractérisé par le fait qu'à chaque roue de véhicule (2, 4; 2', 4') est associé coaxialement un corps de révolution (1, 1') en forme de cylindre ou de tronc de cône, qui peut être entraîné à une vitesse de rotation supérieure à celle de la rou de véhicule (2, 4; 2', 4').

3. Dispositif selon les revendications 1 et 2, caractérisé par le fait qu'il est prévu entre la roue de véhicule (2, 4; 2', 4') et le corps de révolution (1, 1') un mécanisme de transmission (3, 3') dont le côté de sortie est relié au corps de révolution (1, 1').

4. Dispositif selon les revendications 1 à 3, caractérisé par le fait que le corps de révolution (1, 1') est disposé entre deux moitiés de rou (2) réalisant un effect de flasque terminal.

5. Dispositif selon les revendications 1 à 4, caractérisé par le fait qu'une ouverture de sortie (7) d'un canal en forme de buse (6) est dirigée sur le corps de révolution (1, 1'), l'ouverture d'entrée (8) du canal étant orientée dans le sens de marche.

6. Dispositif selon les revendications 1 à 5, caractérisé par le fait que le corps de révolution (1, 1') est intégré à la jante (4, 4') de la roue de véhicule (2, 2') et que l'axe est monté sur un point fixe statique voisin.

7. Dispositif selon au moins l'une des revendications 1 à 6, caractérisé par le fait que le corps de révolution (1, 1') est agencé sous la forme d'un chapeau de roue sur le côté extérieur et/ou qu'un arbre d'entraînement est agencé comme un corps de révolution (1, 1').

Fig. 1

Fig. 2